(19) Europäisches Patentamt

European Patent Office

Office européen des brevets

(11) **EP 2 259 643 B1**

(12) **FASCICULE DE BREVET EUROPEEN**

(45) Date de publication et mention de la délivrance du brevet:
**10.10.2018 Bulletin 2018/41**

(51) Int Cl.:
*H04W 64/00* *(2009.01)*      *G01S 5/00* *(2006.01)*

(21) Numéro de dépôt: **10157816.9**

(22) Date de dépôt: **25.03.2010**

(54) **Procédé de transmission d'informations de position par un dispositif mobile**

Verfahren zur Übertragung von Positionsinformationen über eine mobile Vorrichtung

Method for transmitting position information by a mobile device

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.05.2009 FR 0902368**

(43) Date de publication de la demande:
**08.12.2010 Bulletin 2010/49**

(73) Titulaire: **Thales**
**92400 Courbevoie (FR)**

(72) Inventeurs:
• **Monnerat, Michel**
**31240, SAINT JEAN (FR)**
• **Buret, Hervé**
**31830, PLAISANCE DU TOUCH (FR)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
**WO-A-2004/036240      WO-A-2005/103754**
**WO-A-2007/018409      US-A1- 2006 079 244**

**Description**

La présente invention concerne un procédé de transmission d'informations de position par un dispositif mobile. Elle s'applique notamment au domaine des systèmes de télépéage routier, autoroutier et urbain et à tout autre dispositif de paiement géolocalisé, ainsi qu'aux dispositifs visant à mémoriser et/ou à transmettre périodiquement des informations de positions.

Dans tous les systèmes de poursuite d'un dispositif mobile tel qu'un véhicule ou une flotte de véhicules, il est connu, notamment du document US 2006/079244, que le véhicule transmette périodiquement des informations concernant sa position vers un serveur central. La période de la transmission dépend du type d'application qui utilise ces informations. Pour des applications qui nécessitent de transmettre ces informations très souvent avec une période basse de l'ordre de quelques secondes, voire d'une seconde, le véhicule transmet généralement sa position par un moyen de télécommunication, par exemple de type réseau cellulaire ou par satellites. La transmission des informations de position est généralement réalisée sous la forme de l'envoi d'un triplet de données relatives à la latitude, la longitude et l'altitude du véhicule dans un système de coordonnées prédéterminé. Les informations de position peuvent aussi être transmises sous la forme d'un ensemble de pseudo-distances entre le dispositif mobile et des points de référence, les points de références étant des satellites dans le cas de l'utilisation d'un système de navigation par satellite GNSS (en anglais : Global Navigation Satellite System). Typiquement, dans le système normalisé connu sous l'acronyme 3GPP (en anglais : Third Génération Partnership Project), chacune des données de position est codée en binaire sur 32 bits ce qui implique un débit égal à trois fois 32 bits à transmettre par seconde et par véhicule lorsque les informations de position sont relatives à la latitude, la longitude et l'altitude et que la période de transmission est égale à une seconde.

Pour des flottes de véhicules importantes, la quantité d'informations à transmettre devient très grande et coûteuse alors que les débits autorisés par les systèmes de télécommunication sont limités. Pour généraliser les systèmes de report de position à un grand nombre de véhicules, il est donc impératif de limiter le volume des données de position à transmettre.

L'invention a pour but de résoudre ces problèmes et de proposer un procédé transmission d'informations de position reportées par un dispositif mobile ne présentant pas les inconvénients des solutions connues et permettant de limiter le volume des données de position à transmettre.

Pour cela, l'invention concerne un procédé de transmission d'informations de position par un dispositif mobile consistant à acquérir, à bord du dispositif mobile, des informations de positions du dispositif mobile à partir de signaux de navigation GNSS émis par une constellation de satellites et à transmettre les informations de positions vers un serveur de positions, caractérisé en ce qu'il consiste :

- à partir d'un instant $t_0$ initial et à des instants $t_i$ successifs supérieurs à $t_0$ et espacés d'une période Tv, à mesurer périodiquement, des pseudo-distances de séparation du dispositif mobile par rapport aux satellites de la constellation,
- à partir de la mesure de pseudo-distance réalisée à l'instant $t_0$ initial, à déterminer une première information de position absolue du dispositif mobile à l'instant $t_0$ initial,
- à partir de l'information de position absolue à l'instant initial et pour chaque mesure réalisée aux instants $t_i$ successifs, à déterminer des informations de variations de positions successives dudit dispositif mobile entre deux instants de mesures consécutifs $t_i$ et $t_i + Tv$,
- à coder et à transmettre l'information de position absolue et les informations de variations de positions successives au serveur de positions.

Avantageusement, le procédé consiste en outre, à partir des mesures de pseudo-distances réalisées aux instants ti successifs et à partir de l'information de position absolue à l'instant initial $t_0$, à déterminer périodiquement, à une période Ta, des informations de positions absolues du dispositif mobile, la période Ta étant égale à un multiple, supérieur à un, de la période Tv.

Selon un mode de réalisation de l'invention, les informations de positions absolues et les informations de variations de positions transmises au serveur de positions par le dispositif mobile sont respectivement les mesures de pseudo-distances acquises par le dispositif mobile et des variations de pseudo-distances calculées à bord du dispositif mobile, les positions successives du dispositif mobile étant calculées par le serveur de positions.

Selon un autre mode de réalisation de l'invention, les informations de positions absolues et les informations de variations de positions sont respectivement des triplets de valeurs correspondant à la latitude (lat), la longitude (long) et l'altitude (alt) du dispositif mobile et des variations de latitude ($\delta$lat), de longitude ($\delta$long) et d'altitude ($\delta$alt) du dispositif mobile.

Avantageusement, les informations de positions absolues et les informations de variations de positions sont des nombres réels comportant un nombre de chiffres significatifs successifs d'importance variable, et le procédé consiste en outre, pour chaque information, à sélectionner les chiffres significatifs en fonction d'une estimation de leur degré d'importance et à transmettre au serveur de positions un nombre de chiffres significatifs réduit, les chiffres estimés d'importance moindre étant supprimés.

Alternativement, les informations de positions absolues et les informations de variations de positions sont des nombres réels comportant un nombre de chiffres significatifs successifs d'importance variable, et le procédé consiste en outre, pour chaque information, à sélectionner les chiffres significatifs en fonction d'une estimation de leur degré d'importance et à coder puis à transmettre tous les chiffres significatifs, les chiffres estimés d'importance moindre étant codés sur un nombre de bits inférieur au nombre de bits utilisés pour les chiffres ayant un degré d'importance supérieur.

Selon un autre mode de réalisation de l'invention, le procédé consiste à transmettre un identifiant d'un segment de route sur lequel est localisé le dispositif mobile et les informations de positions absolues et les informations de variations de positions sont respectivement des abscisses curvilignes et des variations d'abscisses curvilignes du dispositif mobile sur le segment de route.

Avantageusement, l'identifiant de segment de route est obtenu à partir d'une base de données cartographiques vectorielles.

Avantageusement, les abscisses curvilignes et les variations d'abscisses curvilignes sont calculées et codées à bord du dispositif mobile avec un code binaire fourni par une table de Huffman stockée dans une base de données cartographiques vectorielles, ou fourni par le serveur de positions.

La transmission des informations de positions et des informations de variations de positions peut être réalisée au fur et à mesure de leur acquisition par un système de communication mobile par réseau cellulaire. Alternativement, les informations de positions et les informations de variations de positions ou peuvent être stockées dans une mémoire à bord du dispositif mobile et transmises globalement lors du passage du dispositif mobile à proximité d'un relais terrestre muni d'un système de radiocommunication.

D'autres particularités et avantages de l'invention apparaîtront clairement dans la suite de la description donnée à titre d'exemple purement illustratif et non limitatif, en référence aux dessins schématiques annexés qui représentent :

- figures 1a et 1b : deux exemples schématiques de systèmes de localisation d'un dispositif mobile, par satellite, selon l'invention ;
- figure 2 : Un exemple de méthode de détermination de la position d'un récepteur GNSS dans un dispositif mobile, selon l'invention ;
- figure 3 : un schéma d'un exemple de transmission des informations de position, selon un premier mode de réalisation de l'invention ;
- figure 4 : un exemple de courbes donnant la précision d'une mesure de pseudo-distance en fonction du rapport signal à bruit, selon l'invention ;
- figure 5 : un schéma d'un exemple de transmission des informations de position, selon un deuxième mode de réalisation de l'invention ;
- figure 6 : un schéma d'un exemple de transmission des informations de position, selon un troisième mode de réalisation de l'invention ;

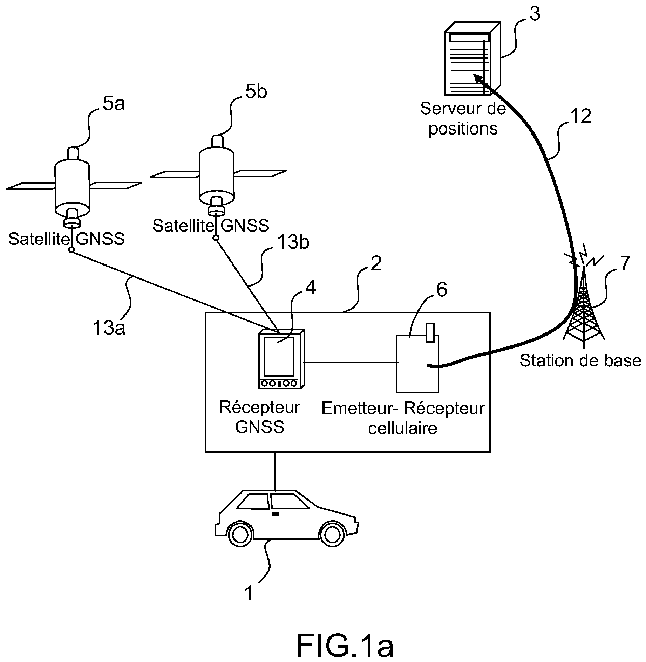

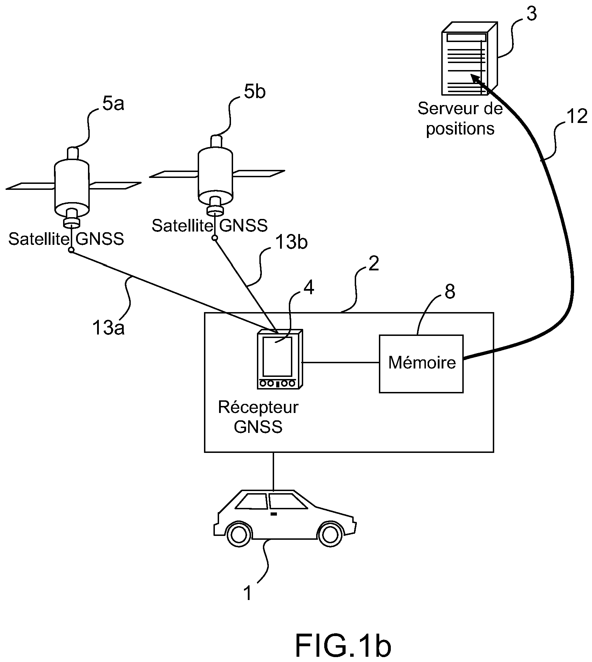

Les figures 1a et 1b représentent deux exemples de systèmes de localisation d'un dispositif mobile 1, par exemple un véhicule, par satellite, selon l'invention. Le système de localisation comporte, à bord du véhicule 1, un dispositif de localisation et de diffusion 2 destiné à réaliser des mesures permettant de déterminer la position et/ou la vitesse du véhicule et à transmettre ces informations de localisation à un serveur de positions 3 chargé de les stoker et/ou de les exploiter. Le dispositif de localisation et de diffusion 2 comporte un récepteur 4 de signaux de navigation GNSS (en anglais : Global Navigation Satellite System) tels qu'un récepteur GPS (en anglais : Global Positioning System) ou Galileo, émis par une constellation de satellites 5a, 5b. Les mesures réalisées à bord du véhicule peuvent être transmises directement au serveur de position 3 qui en déduit les informations de position du véhicule. Alternativement, les informations de position du véhicule peuvent être calculées à bord du véhicule par le récepteur GNSS 4 à partir de l'exploitation de signaux 13a et 13b émis par les satellites 5a, 5b. Le nombre de satellites doit être au moins égal à quatre pour déterminer les quatre coordonnées de position du véhicule dans l'espace x, y, z et dans le temps t. La transmission des informations de position vers le serveur de position 3 peut être réalisée en temps réel au fur et à mesure de l'acquisition de ces informations ou alternativement, être reportée dans le temps.

Lorsque la transmission des informations est réalisée en temps réel comme représenté sur la figure 1a, le dispositif de localisation et de diffusion 2 comporte en outre un émetteur-récepteur 6 de communication mobile par réseau cellulaire, par exemple de type GSM (en anglais : Global System for Mobile communications), UMTS (en anglais : Universal Mobile Télécommunications System), ou CDMA (en anglais : Code Division Multiple Access) relié au récepteur GNSS 4. L'information de position déterminée par le récepteur 4 est alors fournie à l'émetteur-récepteur 6 de communication mobile qui, suivant une période prédéterminée dépendant de l'application, envoie ladite information de position au serveur de positions 3 à travers un canal de communication 12 et par l'intermédiaire d'un relais terrestre tel que par exemple une station de base 7 couvrant une zone de couverture, appelée aussi cellule, dans laquelle se trouve le dispositif mobile 1, ou un portique routier.

Lorsque la transmission est reportée dans le temps, comme représenté sur la figure 1b, les informations de position acquises successivement par le récepteur 4 sont stockées dans une mémoire 8 de ce récepteur 4 et transmises simultanément au serveur de positions 3 par l'intermédiaire d'un point d'accès de radiocommunication local tel que, par exemple, un portique routier de type portique de télépéage équipé de moyens de radiocommunication. Le report dans le temps de la transmission des informations de position permet de s'affranchir des systèmes de téléphonie mobile ce qui est donc plus économique.

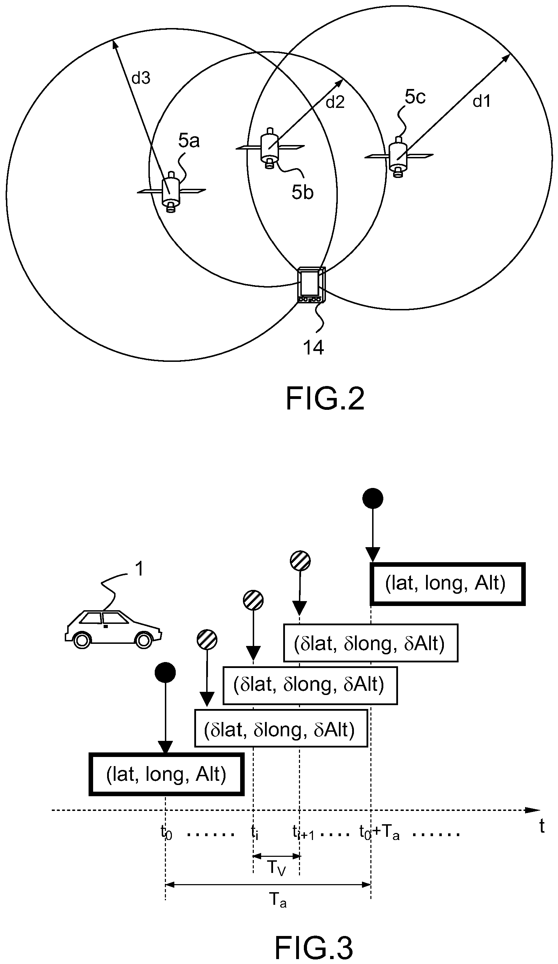

Un exemple de méthode de détermination de la position du récepteur GNSS 4 est représenté schématiquement sur la figure 2. La méthode consiste pour le récepteur 4 à déterminer les pseudo-distances d1, d2, d3 le séparant d'au moins trois satellites 5a, 5b, 5c de la constellation puis à en déduire le point d'intersection 14 des sphères dont le centre est matérialisé par la position du satellite lui même et dont le rayon est fourni par les pseudo-distances d1, d2, d3. La position du récepteur GNSS 4 correspond à ce point d'intersection 14. La mesure des pseudo-distances d1, d2, d3 est réalisée dans le récepteur 4 par chronométrage du temps d'arrivée de signaux radio électriques constituant un message de navigation provenant des satellites 5a, 5b, 5c. Les informations essentielles provenant de chaque satellite via le message de navigation et que doit traiter le récepteur sont constituées par la date d'émission du message et la position du satellite au moment de l'émission du signal radio électrique. Le satellite transmet dans son message de navigation ses éphémérides (paramètres Kepleriens) permettant au récepteur 4, ou au serveur de position 3, de calculer la position du satellite dans un référentiel lié à la Terre. Les éphémérides sont constituées dans le cas d'un signal GPS de 16 paramètres répétés toutes les 30 secondes dans le message de navigation.

La position du satellite étant obtenue, il reste au récepteur 4, ou au serveur de positions 3, à détecter l'heure d'émission du message afin de déduire le temps de propagation du signal émis par le satellite et la pseudo-distance le séparant du satellite, puis le rayon d'une des 4 sphères nécessaires, et la position du véhicule 1.

Pour réduire le volume d'informations transmises au serveur de position 3, l'invention consiste pour chaque véhicule mobile 1, dans une première étape, à déterminer une première information de position absolue du véhicule à un instant $t_0$ initial puis, dans une deuxième étape, à partir de l'instant initial $t_0$, à déterminer périodiquement, des informations de variations de positions successives dudit véhicule mobile au cours du temps entre des instants de mesures consécutifs, par exemple $t_i$ et $t_i+Tv$, i étant un nombre entier supérieur à 0. La détermination des variations de position successives est réalisée à une période Tv prédéterminée choisie en fonction de l'application concernée. De façon à s'assurer que les informations de positions obtenues à partir des valeurs de variations sont correctes et ne dérivent pas dans le temps, le procédé consiste préférentiellement, à déterminer périodiquement, à une période Ta égale à un multiple, supérieur à un, de la période Tv, des informations de position absolue, et entre chaque détermination d'information de position absolue, à déterminer à la période Tv des informations de variations de positions successives dudit véhicule mobile. Les informations de positions absolues ou de variations de positions peuvent être calculées à bord du véhicule mobile par le récepteur 4 puis soit transmises au serveur de positions 3 au fur et à mesure de leur acquisition, soit stockées dans une mémoire 8 du récepteur 4 et transmises globalement par l'intermédiaire d'un point d'accès de radiocommunication local. Alternativement, les informations de positions absolues ou de variations de positions peuvent être calculées par le serveur de positions 3 à partir des mesures de pseudo-distances, ou respectivement des variations entre des mesures de pseudo-distances consécutives, réalisées et transmises directement par le récepteur 4 sans traitement préalable. Les mesures de pseudo-distances réalisées par le récepteur 4 correspondent aux pseudo-distances qui séparent le véhicule des satellites du système de localisation.

Dans un premier mode de réalisation de l'invention représenté sur la figure 3, les informations de positions absolues déterminées à la période Ta, par exemple aux instants $t_0$ et $t_0 + Ta$, sont des triplets de valeurs correspondant à la latitude lat, la longitude long et l'altitude alt du véhicule, et les variations de positions successives déterminées à la période Tv sont des triplets de valeurs correspondant aux variations de latitude $\delta$lat, de longitude $\delta$long et d'altitude $\delta$alt du véhicule entre des instants de mesure consécutifs, par exemple $t_i$ et $t_i+Tv$.

La précision des mesures réalisées par le récepteur 4 et la précision des informations de position qui sont déterminées à partir de ces mesures, dépendent de la qualité des signaux GNSS reçus par le récepteur 4 et en particulier du rapport signal à bruit reçu ou des résidus permettant de calculer la position. Par conséquent, les mesures réalisées, les valeurs absolues correspondant à la latitude lat, la longitude long et l'altitude alt du véhicule ainsi que les valeurs de variations correspondant aux variations de latitude $\delta$lat, de longitude $\delta$long et d'altitude $\delta$alt du véhicule entre des instants de mesure consécutifs comportent un nombre de chiffres significatifs dont l'importance peut varier. Avantageusement, l'invention consiste en outre, à déterminer quels sont les chiffres les plus significatifs et, au niveau du codage binaire de l'information à transmettre, à attribuer une importance moindre aux chiffres moins significatifs.

L'importance des chiffres significatifs peut être estimée à partir d'une mesure du rapport signal à bruit réalisée sur chaque signal GNSS reçu et pris en compte dans le calcul de la position. La relation entre le rapport signal à bruit et une estimation de la précision de mesure de pseudo-distance est connue de l'homme de l'art et est obtenue par les relations décrites ci-après.

La précision globale de la mesure de pseudo-distance dépend d'un ensemble de contributions :

- Précision $\sigma_o$ liée à la précision d'orbite des satellites, typiquement de l'ordre de 1 m,
- Précision $\sigma_c$ liée à la précision d'horloge du satellite, typiquement bornée par la valeur de 2m,
- Précision $\sigma_{io}$ liée à la traversée ionosphérique, typiquement 1m,
- Précision liée à la présence de Multi-trajets, $\sigma_{MP}$, de l'ordre de 1m.
- Précision liée au bruit thermique, La formule suivante permet en effet de relier classiquement l'écart type sur la mesure de pseudo-distance et le rapport signal à bruit :

$$\sigma_b = \sqrt{\frac{B_L d}{2C/N_0}\left(1 + \frac{2}{(2-d)C/N_0 T_{Coherent}}\right)} * T_c$$

où

- $B_L$ représente la bande de fréquences de la boucle de poursuite du signal GNSS,
- d représente l'espacement du corrélateur dit 'Avance-Retard' entre le signal reçu et la réplique du code d'étalement utilisé par le satellite concerné par la mesure de pseudo-distance, réplique qui est générée localement par le récepteur,
- C/N0 représente le rapport signal à bruit
- $T_{coherent}$ réprésente le temps d'intégration cohérent du signal
- Tc représente la durée de bribe du signal GNSS

La précision globale sur la mesure de pseudo-distance vers un satellite k, classiquement dénommée UERE (User Equivalent Range Error) est alors donnée par la relation :

$$\sigma_k = \sqrt{\sigma_b{}^2 + \sigma_o{}^2 + \sigma_c{}^2 + \sigma_{io}{}^2 + \sigma_{MP}{}^2}$$

La précision de la position du dispositif mobile peut se déduire alors aisément de la précision des mesures de pseudo-distance vers le satellite k $\sigma_k$ par application d'un facteur géométrique déterminé par le récepteur et connu par l'homme de métier sous le nom de dilution de géométrie, DOP.

$$\mathrm{Pr}\,écision = GDOP * \sigma,$$

où

$\sigma$ est la moyenne quadratique des $\sigma_k$, et
GDOP est donnée par :

$$GDOP = \sqrt{trace(A)}\ ,\ \text{où}\ \ A = ({}^t GG)^{-1},$$

$$G = \begin{bmatrix} u_{1,1} & u_{1,2} & u_{1,3} & -1 \\ . & . & . & . \\ u_{k,1} & u_{k,2} & u_{k,3} & -1 \end{bmatrix}$$

$$\begin{cases} u_{k,1} = \dfrac{x_k - \overline{x}_{Rx}}{d_k} \\[2ex] u_{k,2} = \dfrac{y_k - \overline{y}_{Rx}}{d_k} \\[2ex] u_{k,3} = \dfrac{z_k - \overline{z}_{Rx}}{d_k} \end{cases}$$

où $x_k$, $y_k$, $z_k$ sont les coordonnées du satellite k et $\bar{x}_{Rx}, \bar{y}_{Rx}, \bar{z}_{Rx}$ sont les coordonnées approximatives du récepteur.

La sélection du nombre de chiffres significatifs sur la position est alors déduite directement de la précision de position ainsi estimée.

Selon une première réalisation de l'invention, les chiffres estimés non significatifs sont supprimés et seuls les chiffres significatifs sont codés et transmis. Selon une variante de réalisation de l'invention, tous les chiffres sont codés et transmis mais les chiffres moins significatifs sont codés sur moins de bits que les chiffres les plus significatifs. La suppression des chiffres dont la fiabilité est douteuse ou leur codage sur un nombre de bits plus faible permet de réduire fortement la quantité d'information à stocker et à transmettre.

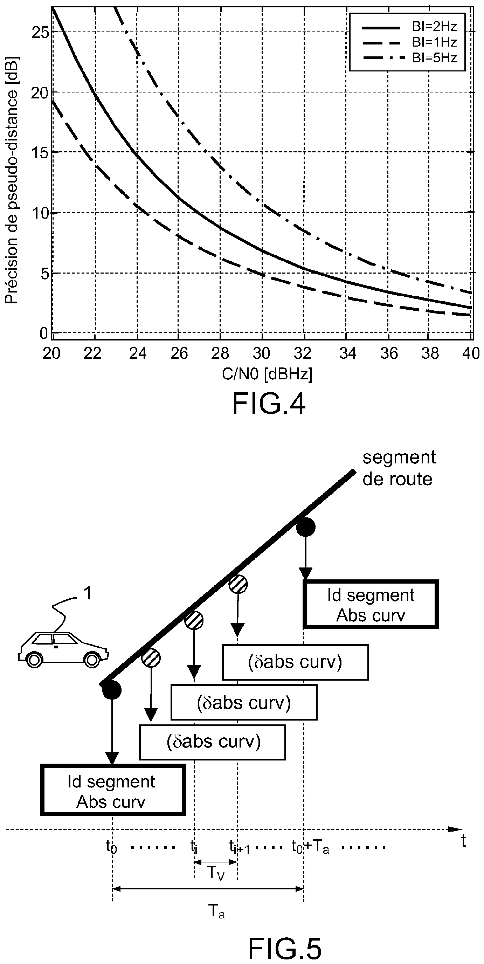

Typiquement, la précision en fonction du rapport signal à bruit est donnée par des courbes représentées par exemple sur la figure 4 pour un récepteur classique. Selon ces courbes, pour un récepteur fonctionnant à 30dBHz avec une bande de boucle de 5Hz, la précision de mesure liée au bruit thermique est approximativement égale à $\sigma_b$ = 10$m$. Il en résulte que la précision globale de la mesure de pseudo-distance est de 10,3m.

Ceci signifie que les chiffres significatifs qui vont au delà d'une précision de 10m n'ont aucune plus value sur le contenu informationnel. Ceci permet de réaliser un encodage de la latitude et la longitude en degré avec seulement 5 chiffres significatifs.

Dans un deuxième mode de réalisation de l'invention représenté sur la figure 5, les informations de positions absolues déterminées à la période Ta, par exemple aux instants $t_0$ et $t_0$ + Ta, sont deux valeurs correspondant respectivement, à un identifiant du segment de route sur lequel est localisé le véhicule mobile et l'abscisse curviligne correspondant à la position du véhicule sur ledit segment de route. Les variations de positions successives déterminées, à la période Tv, entre deux mesures de position absolue sont des variations de l'abscisse curviligne du véhicule entre des instants de mesure consécutifs, par exemple $t_i$ et $t_i$+Tv. L'identifiant du segment de route sur lequel se trouve le véhicule est déterminé au moyen d'une base de données cartographique vectorielle par exemple installée dans le récepteur GNSS 4. La base cartographique vectorielle identifie un segment de route par un point d'origine et un point d'arrivée, ce qui permet d'obtenir une représentation géométrique de chaque segment de route. Ce deuxième mode de réalisation de l'invention permet de ne transmettre qu'une seule information de position codée en binaire au lieu de trois à chaque période de mesure Tv et de réduire encore le volume d'informations à transmettre au serveur de positions 3.

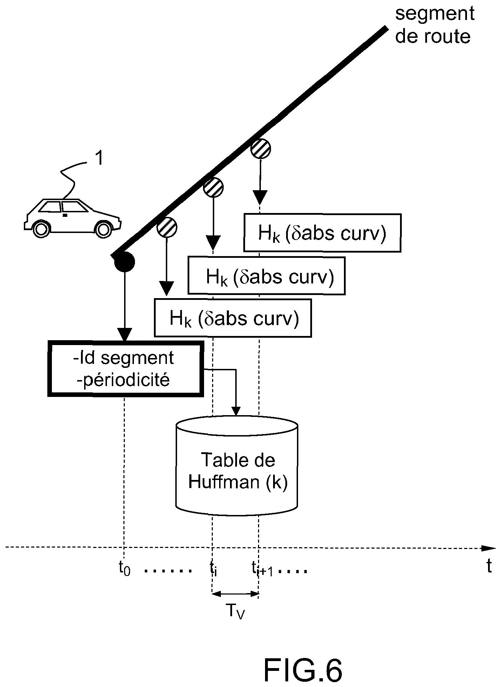

Dans un troisième mode de réalisation de l'invention représenté sur la figure 6, les abscisses curvilignes et les variations d'abscisses curvilignes, obtenues dans l'exemple de la figure 5, sont calculées à bord du véhicule par le récepteur 4 et codées avec un code binaire dépendant du segment de route sur lequel se trouve le véhicule préalablement à leur transmission au serveur de positions 3. Ce codage permet de compresser davantage les informations transmises au serveur de positions. Le code binaire peut être par exemple fourni par le serveur de positions ou par une table de Huffman stockée dans une base cartographique vectorielle installée dans le récepteur 4. Dans le cas d'un codage fourni par une table de Huffman, pour permettre le décodage du message codé transmis par le récepteur 4, la table de Huffman est également stockée dans une mémoire du serveur de positions 3. La transmission des informations codées est réalisée par un moyen de radiocommunication tel qu'un relais terrestre.

Le codage de Huffman est réalisé à partir de la connaissance de l'identifiant du segment de route sur lequel se trouve le véhicule et est différent pour chaque segment de route. La connaissance du segment de route permet de savoir sur quel type de route se trouve le véhicule, s'il s'agit d'une route départementale, ou d'une route nationale, ou d'une autoroute, si le segment de route est en zone urbaine ou non, et les conditions de limitations de vitesse associées. Ces informations permettent de déterminer la vitesse de circulation la plus probable du véhicule et d'affecter, à cette vitesse de probabilité la plus forte, une valeur de codage sur un nombre de bits minimal, les autres vitesses étant codées avec un nombre de bits d'autant plus grand que leur probabilité diminue.

Par exemple, sur une route nationale, en dehors d'une ville, il y a une forte probabilité pour que le véhicule roule, par exemple, à quatre-vingt kilomètres par heure. Si le récepteur 4 transmet une variation d'abscisse curviligne toutes les secondes, il y a une forte probabilité pour que le véhicule ait parcouru vingt mètres entre deux instants de mesures successifs. Cette valeur la plus probable sera donc codée en binaire, par exemple par la valeur 1. A chaque fois que le récepteur 4 transmettra la valeur 1, correspondant à un seul bit, cela signifiera que le véhicule aura parcouru environ vingt mètres. En revanche, si le véhicule parcourt cinquante mètres, le récepteur enverra un nombre de bits supérieur à un, par exemple trois bits. Chacune des distances parcourues sera ainsi codée par des valeurs différentes selon le principe connu de Huffman, la valeur la plus probable étant codée sur le nombre de bits le plus faible. A chaque segment de route correspond un codage de Huffman spécifique par exemple stocké dans une base de données cartographique vectorielle du récepteur 4 et/ou stocké dans une mémoire du serveur de position 3.

**Revendications**

**1.** Procédé de transmission d'informations de position par un dispositif mobile consistant à acquérir, à bord du dispositif mobile, des informations de positions du dispositif mobile (1) à partir de signaux de navigation GNSS émis par une constellation de satellites (5a, 5b, 5c) et à transmettre les informations de positions vers un serveur de positions (3), **caractérisé en ce qu'**il consiste :

- à partir d'un instant $t_0$ initial et à des instants $t_i$ successifs supérieurs à $t_0$ et espacés d'une période Tv, à mesurer périodiquement, des pseudo-distances (d1, d2, d3) de séparation du dispositif mobile (1) par rapport aux satellites (5a, 5b, 5c) de la constellation,
- à partir de la mesure de pseudo-distance réalisée à l'instant $t_0$ initial, à déterminer une première information de position absolue du dispositif mobile à l'instant $t_0$ initial,
- à partir de l'information de position absolue à l'instant initial et pour chaque mesure réalisée aux instants $t_i$ successifs, à déterminer des informations de variations de positions successives dudit dispositif mobile (1) entre deux instants de mesures consécutifs $t_i$ et $t_i$ +Tv,
- à coder et à transmettre l'information de position absolue et les informations de variations de positions successives au serveur de positions (3).

**2.** Procédé selon la revendication 1, **caractérisé en ce qu'**il consiste en outre, à partir des mesures de pseudo-distances réalisées aux instants ti successifs et à partir de l'information de position absolue à l'instant initial $t_0$, à déterminer périodiquement, à une période Ta, des informations de positions absolues du dispositif mobile (1), la période Ta étant égale à un multiple, supérieur à un, de la période Tv.

**3.** Procédé selon l'une des revendications 1 ou 2, **caractérisé en ce que** les informations de positions absolues et les informations de variations de positions transmises au serveur de positions (3) par le dispositif mobile (1) sont respectivement les mesures de pseudo-distances acquises par le dispositif mobile (1) et des variations de pseudo-distances calculées à bord du dispositif mobile (1), les positions successives du dispositif mobile (1) étant calculées par le serveur de positions (3).

**4.** Procédé selon l'une des revendications 1 ou 2, **caractérisé en ce que** les informations de positions absolues et les informations de variations de positions sont respectivement des triplets de valeurs correspondant à la latitude (lat), la longitude (long) et l'altitude (alt) du dispositif mobile (1) et des variations de latitude ($\delta$lat), de longitude ($\delta$long) et d'altitude ($\delta$alt) du dispositif mobile (1).

**5.** Procédé selon la revendication 4, **caractérisé en ce que** les informations de positions absolues et les informations de variations de positions sont des nombres réels comportant un nombre de chiffres significatifs successifs d'importance variable, et **en ce qu'**il consiste en outre, pour chaque information, à sélectionner les chiffres significatifs en fonction d'une estimation de leur degré d'importance et à transmettre au serveur de positions (3) un nombre de chiffres significatifs réduit, les chiffres estimés d'importance moindre étant supprimés.

**6.** Procédé selon la revendication 4, **caractérisé en ce que** les informations de positions absolues et les informations de variations de positions sont des nombres réels comportant un nombre de chiffres significatifs successifs d'importance variable, et **en ce qu'**il consiste en outre, pour chaque information, à sélectionner les chiffres significatifs en fonction d'une estimation de leur degré d'importance et à coder puis à transmettre tous les chiffres significatifs, les chiffres estimés d'importance moindre étant codés sur un nombre de bits inférieur au nombre de bits utilisés pour les chiffres ayant un degré d'importance supérieur.

**7.** Procédé selon l'une des revendications 1 ou 2, **caractérisé en ce qu'**il consiste à transmettre en outre un identifiant d'un segment de route sur lequel est localisé le dispositif mobile (1) et **en ce que** les informations de positions absolues et les informations de variations de positions sont respectivement des abscisses curvilignes et des variations d'abscisses curvilignes du dispositif mobile (1) sur le segment de route.

**8.** Procédé selon la revendication 7, **caractérisé en ce que** l'identifiant de segment de route est obtenu à partir d'une base de données cartographiques vectorielles.

**9.** Procédé selon la revendication 7, **caractérisé en ce que** les abscisses curvilignes et les variations d'abscisses curvilignes sont calculées et codées à bord du dispositif mobile (1) avec un code binaire fourni par une table de Huffman stockée dans une base de données cartographiques vectorielles ou fourni par le serveur de positions (3).

**10.** Procédé selon l'une quelconque des revendications précédentes, **caractérisé en ce que** la transmission des informations de positions et des informations de variations de positions est réalisée au fur et à mesure de leur acquisition par un système de communication mobile par réseau cellulaire.

11. Procédé selon l'une quelconque des revendications 1 à 9, **caractérisé en ce que** les informations de positions et des informations de variations de positions sont stockées dans une mémoire (8) à bord du dispositif mobile (1) et transmises globalement lors du passage du dispositif mobile (1) à proximité d'un relais terrestre muni d'un système de radiocommunication.

## Patentansprüche

1. Verfahren zum Übertragen von Positionsinformationen über eine mobile Vorrichtung, darin bestehend, an Bord der mobilen Vorrichtung Positionsinformationen der mobilen Vorrichtung (1) anhand von GNSS-Navigationssignalen zu erfassen, welche durch eine Satellitenkonstellation (5a, 5b, 5c) gesendet werden und die Positionsinformationen an einen Positionsserver (3) zu übertragen, **dadurch gekennzeichnet, dass** es in Folgendem besteht:

   - im regelmäßigen Messen von Pseudotrennungsdistanzen (d1, d2, d3) zwischen der mobilen Vorrichtung (1) und den Satelliten (5a, 5b, 5c) der Konstellation, ab einem anfänglichen Zeitpunkt $t_o$ und zu aufeinanderfolgenden Zeitpunkten $t_i$, welche größer als $t_o$ und durch einen Zeitabstand Tv getrennt sind,
   - im Bestimmen, anhand der Messung einer Pseudodistanz, welche zum anfänglichen Zeitpunkt $t_o$ bewerkstelligt wird, einer ersten Absolut-Positionsinformation der mobilen Vorrichtung zum anfänglichen Zeitpunkt $t_o$,
   - im Bestimmen der aufeinanderfolgenden Positions-Variationsinformationen der mobilen Vorrichtung (1) zwischen zwei aufeinanderfolgenden Messzeitpunkten $t_i$ und $t_i$ +Tv, anhand der Absolut-Positionsinformation zum anfänglichen Zeitpunkt und für jede Messung zu den aufeinander folgenden Zeitpunkten $t_i$,
   - im Codieren und Übertragen der Absolut-Positionsinformation und der aufeinanderfolgenden Positions-Variationsinformationen an den Positions-Server (3).

2. Verfahren nach Anspruch 1, **dadurch gekennzeichnet, dass** es zudem darin besteht, anhand der Messungen von Pseudodistanzen, welche zu den aufeinander folgenden Zeitpunkten $t_i$ bewerkstelligt werden und anhand der Absolut-Positionsinformation zum Zeitpunkt $t_o$, regelmäßig im Abstand eines Zeitraums Ta Absolut-Positionsinformation der mobilen Vorrichtung (1) zu bestimmen, wobei der Zeitraum Ta ein Vielfaches des Zeitraums Tv größer als eins ist.

3. Verfahren nach einem der Ansprüche 1 oder 2, **dadurch gekennzeichnet, dass** die Absolut-Positionsinformationen und die Positions-Variationsinformationen, welche an den Positions-Server (3) durch die mobile Vorrichtung (1) übertragen werden, jeweils Messungen von Pseudodistanzen sind, welche von der mobilen Vorrichtung (1) erfasst werden und Variationen von Pseudodistanzen, welche an Bord der mobilen Vorrichtung (1) berechnet werden, wobei die aufeinander folgenden Positionen der mobilen Vorrichtung (1) durch den Positions-Server (3) berechnet werden.

4. Verfahren nach einem der Ansprüche 1 oder 2, **dadurch gekennzeichnet, dass** die Absolut-Positionsinformationen und die Positions-Variationsinformationen jeweils Tripletten von Werten sind, welche dem Breitengrad (lat), dem Längengrad (long) und der Höhe (alt) der mobilen Vorrichtung (1) und Variationen von Breitengrad ($\delta$lat), Längengrad ($\delta$long) und Höhe ($\delta$alt) der mobilen Vorrichtung (1) entsprechen.

5. Verfahren nach Anspruch 4, **dadurch gekennzeichnet, dass** die Absolut-Positionsinformationen und die Positions-Variationsinformationen reelle Zahlen sind, welche eine Anzahl signifikanter aufeinanderfolgender Stellen variabler Bedeutung beinhalten, und dadurch, dass es zudem darin besteht, für jede Information die signifikanten Stellen gemäß einer Schätzung ihres Bedeutungsgrades auszuwählen und an den Positions-Server (3) eine reduzierte Anzahl signifikanter Stellen zu übertragen, wobei die als von geringerer Bedeutung geschätzten Stellen gelöscht werden.

6. Verfahren nach Anspruch 4, **dadurch gekennzeichnet, dass** die Absolut-Positionsinformationen und die Positions-Variationsinformationen reelle Zahlen sind, welche eine Anzahl signifikanter aufeinanderfolgender Stellen variabler Bedeutung beinhalten, und dadurch, dass es zudem darin besteht, für jede Information die signifikanten Stellen gemäß einer Schätzung ihres Bedeutungsgrades auszuwählen und zu codieren, und anschließend alle signifikanten Stellen zu übertragen, wobei die als von geringerer Bedeutung geschätzten Stellen auf eine Anzahl von Bits codiert werden, welche geringer ist als die Anzahl der Bits, die für Stellen mit höherem Bedeutungsgrad verwendet werden.

**7.** Verfahren nach einem der Ansprüche 1 oder 2, **dadurch gekennzeichnet, dass** es darin besteht, zudem eine Kennung eines Streckenabschnitts zu übertragen, in welchem die mobile Vorrichtung (1) lokalisiert ist, und dadurch, dass die Absolut-Positionsinformationen und die Positions-Variationsinformationen jeweils kurvige Abszissen und Variationen von kurvigen Abszissen der mobilen Vorrichtung (1) auf dem Streckenabschnitt sind.

**8.** Verfahren nach Anspruch 7, **dadurch gekennzeichnet, dass** die Kennung des Streckenabschnitts anhand einer Datenbank vektorieller kartografischer Daten erhalten wird.

**9.** Verfahren nach Anspruch 7, **dadurch gekennzeichnet, dass** die kurvigen Abszissen und Variationen von kurvigen Abszissen an Bord der mobilen Vorrichtung (1) berechnet und mit einem binären Code codiert werden, welcher durch eine Huffman-Tabelle bereitgestellt wird, welche in einer Datenbank vektorieller, kartografischer Daten gespeichert ist, oder durch den Positions-Server (3) bereitgestellt wird.

**10.** Verfahren nach einem der vorhergehenden Ansprüche, **dadurch gekennzeichnet, dass** die Übertragung der Positionsinformationen und die Positions-Variationsinformationen progressiv im Zuge ihrer Erfassung durch ein Mobilkommunikationssystem über ein zelluläres Netzwerk erfolgt.

**11.** Verfahren nach einem der Ansprüche 1 bis 9, **dadurch gekennzeichnet, dass** die Positionsinformationen und die Positions-Variationsinformationen in einem Speicher (8) an Bord der mobilen Vorrichtung (1) gespeichert und global beim Passieren der mobilen Vorrichtung (1) in der Nähe einer terrestrischen Zwischenstation übertragen werden, welche mit einem Funkkommunikationssystem ausgerüstet ist.

## Claims

**1.** Method for the transmission of position information by a mobile device consisting in acquiring, on board the mobile device, position information of the mobile device (1) from GNSS navigation signals transmitted by a satellite constellation (5a, 5b, 5c) and in transmitting the position information to a position server (3), **characterized in that** it consists:

- starting from an initial time $t_0$ and at successive times $t_i$ greater than $t_0$ and spaced by a period Tv, in periodically measuring pseudo-distances (d1, d2, d3) of separation of the mobile device (1) with respect to the satellites (5a, 5b, 5c) of the constellation,
- on the basis of the pseudo-distance measurement carried out at the initial time $t_0$, in determining a first item of absolute position information of the mobile device at the initial time $t_0$,
- starting with the absolute position information at the initial time and for each measurement carried out at the successive times $t_i$ in determining successive items of information on the position variation of the said mobile device (1) between two consecutive measurement times $t_i$ and $t_i$ +Tv,
- in encoding and transmitting the absolute position information and the successive items of position variation information to the position server (3).

**2.** Method according to Claim 1, **characterized in that** it furthermore consists, on the basis of the pseudo-distance measurements carried out at the successive times $t_i$ and on the basis of the absolute position information at the initial time $t_0$, in periodically determining, with a period Ta, items of absolute position information of the mobile device (1), the period Ta being equal to a multiple, greater than one, of the period Tv.

**3.** Method according to one of Claims 1 or 2, **characterized in that** the absolute position information and the position variation information transmitted to the position server (3) by the mobile device (1) are the pseudo-distance measurements acquired by the mobile device (1) and variations of pseudo-distance calculated on board the mobile device (1) respectively, the successive positions of the mobile device (1) being calculated by the position server (3).

**4.** Method according to one of Claims 1 or 2, **characterized in that** the absolute position information and the position variation information are respectively triplets of values corresponding to the latitude (lat), longitude (long) and altitude (alt) of the mobile device (1) and variations of latitude ($\delta$lat), of longitude ($\delta$long) and of altitude ($\delta$alt) of the mobile device (1).

**5.** Method according to Claim 4, **characterized in that** the absolute position and the position variation items of information are real numbers comprising a number of successive significant figures of variable importance, and **in that** it furthermore consists, for each item of information, in selecting the significant figures according to an estimation of their degree of importance and in transmitting a reduced number of significant figures to the position server (3), the figures estimated to be of least importance being eliminated.

6. Method according to Claim 4, **characterized in that** the absolute position information and the position variation information are real numbers comprising a number of successive significant figures of variable importance, and **in that** it furthermore consists, for each item of information, in selecting the significant figures according to an estimation of their degree of importance and in encoding and then transmitting all of the significant figures, the figures estimated to be of least importance being encoded using a number of bits lower than the number of bits used for the figures having a higher degree of importance.

7. Method according to one of Claims 1 or 2, **characterized in that** it consists in furthermore transmitting an identifier of a road segment on which the mobile device (1) is located and **in that** the absolute position and position variation items of information are curvilinear abscissas and curvilinear abscissa variations respectively of the mobile device (1) on the road segment.

8. Method according to Claim 7, **characterized in that** the road segment identifier is obtained from a vector cartographic database.

9. Method according to Claim 7, **characterized in that** the curvilinear abscissas and the curvilinear abscissa variations are calculated and encoded on board the mobile device (1) with a binary code provided by a Huffman table stored in a vector cartographic database or provided by the position server (3).

10. Method according to any one of the preceding claims, **characterized in that** the transmission of the position and position variation items of information is carried out progressively, as they are acquired, by a cellular network mobile communication system.

11. Method according to any one of Claims 1 to 9, **characterized in that** the position and position variation items of information are stored in an on-board memory (8) of the mobile device (1) and transmitted globally when the mobile device (1) passes close to a terrestrial relay provided with a radio-communication system.

FIG.1a

FIG.1b

FIG.2

FIG.3

FIG.4

FIG.5

segment
de route

1

$H_k\ (\delta abs\ curv)$

$H_k\ (\delta abs\ curv)$

$H_k\ (\delta abs\ curv)$

-Id segment
-périodicité

Table de
Huffman (k)

$t_0$ ...... $t_i$ $t_{i+1}$ ....

$T_V$

t

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006079244 A